# EUROPÄISCHE PATENTSCHRIFT

(11) **EP 2 586 230 B1**
(45) Veröffentlichungstag und Bekanntmachung des Hinweises auf die Patenterteilung: **29.10.2014**
(21) Anmeldenummer: 11730616.7
(22) Anmeldetag: 27.06.2011
(51) Int. Cl.: H04W 16/32, H04W 4/04, H04W 84/06, H04W 84/18

(54) **STATISCHES MESH-NETZWERK, FLUGZEUG UND VERFAHREN ZUR DATENKOMMUNIKATION**
STATIC MESH NETWORK, AIRPLANE AND METHOD FOR DATA COMMUNICATION
RÉSEAU MAILLÉ STATIQUE, AVION ET PROCEDE DE COMMUNICATION DE DONNÉES

(30) Priorität: 28.06.2010 US 359019 P; 28.06.2010 DE 102010030585
(43) Veröffentlichungstag der Anmeldung: 01.05.2013
(73) Patentinhaber: Airbus Operations GmbH, 21129 Hamburg (DE)
(72) Erfinder: KNEFELKAMP, Sven, 22880 Wedel (DE); BINTERNAGEL, Fabian, 26160 Bad Zwischenahn (DE)
(74) Vertreter: Isarpatent
(86) Internationale Anmeldenummer: PCT/EP2011/060715
(87) Internationale Veröffentlichungsnummer: WO 2012/000936

(56) Entgegenhaltungen:
- EP-A1- 1 739 993
- EP-A1- 1 835 662
- EP-A1- 1 933 534
- WO-A2-03/032503

## Beschreibung

Die vorliegende Erfindung betrifft ein Verfahren zur Datenkommunikation unter Verwendung eines statistischen Mesh-Netzwerkes.

Die vorliegende Erfindung befindet sich im Umfeld von drahtlosen Kommunikationsnetzwerken insbesondere im Flugzeugbereich. Drahtlose Netzwerke sind in verschiedenen Anwendungen allgemein bekannt. Solche drahtlosen Netzwerkarchitekturen basieren in der Regel auf einer so genannten Star-Topologie, bei der ein einzelner zentraler Master vorhanden ist, z. B. ein WLAN Access Point, und verschiedene mit diesem Master verbundene Slaves oder Klienten. Falls der zentrale Master des drahtlosen Netzwerkes ausfällt, wird das komplette drahtlose Netzwerk funktionsunfähig oder hat zumindest eine deutlich reduzierte Funktionalität. Dadurch sind solche, auf einer Startopologie aufgebaute drahtlose Netzwerke nicht sehr robust. Auch die Datenverteilung in solchen drahtlosen Netzwerken ist sehr ineffektiv, da der Master die Daten immer nacheinander an die verschiedenen Klienten verteilen muss.

Aus diesen Gründen werden als drahtlose Kommunikationsnetzwerke zunehmend auch so genannte Mesh-Netzwerke, die auch als Ad-hoc-Netzwerke bezeichnet werden, verwendet. Unter einem Mesh-Netzwerk ist ein Funknetzwerk zu verstehen, das mehrere Netzwerkknoten, also Endgeräte in einem Telekommunikationsnetz, zu einem vermaschten Netz verbindet. Im Unterschied zu Kommunikationsnetzwerken mit einem zentralen Verteiler werden in einem Mesh-Netzwerk Daten von einem Netzwerkknoten zu einem anderen Netzwerkknoten weitergereicht, bis sie den eigentlichen Empfänger oder Adressaten erreicht haben. Spezielle Routingverfahren sorgen dafür, dass sich das Mesh-Netzwerk beständig an die neuen Gegebenheiten anpasst, wenn z. B. neue Netzwerkknoten hinzukommen, wegfallen oder ausfallen. Dadurch verteilt sich die Datenlast in dem Kommunikationsnetzwerk meist besser als in Kommunikationsnetzwerken, die auf einem zentralen Verteiler aufgebaut sind, sodass ein Mesh-Netzwerk auch sehr leistungsfähig ist. Die Verwendung eines Mesh-Netzwerkes bietet eine sehr sichere Variante einer drahtlosen Datenkommunikation, da beim Ausfallen eines Netzwerkknotens durch Umleitung der Datenkommunikation über andere Netzwerkknoten die Kommunikation weiterhin möglich ist. Schließlich ist ein solches Mesh-Netzwerk aufgrund der niedrigen Hardwareerfordernisse auch sehr kostengünstig.

Die vorliegende Erfindung sowie die ihr zugrunde liegende Problematik wird nachfolgend mit Bezug auf ein Mesh-Netzwerk in einer Flugzeugkabine und insbesondere im Zusammenhang mit einem so genannten In-Flight Entertainment (IFE) Kommunikationssystem beschrieben, ohne jedoch die Erfindung dahingehend zu beschränken. IFE-Systeme ist der Überbegriff von Unterhaltungssystemen, welche den Flugzeugpassieren eines Verkehrsflugzeuges während der Flugreise zur Verfügung stehen. Solche IFE-Systeme umfassen elektronische Geräte, die jeweils passagierindividuelle Bildschirme aufweisen, welche an der Rückseite des jeweiligen Vordersitzes, der Wand oder z. B. in der Armlehne eingebaut werden können. Mittels dieser passagierindividuellen Bildschirme kann der Passagier zwischen einer Vielzahl von Filmen und Sendungen, deren Anfangszeit er frei bestimmen kann, Spielen, Musik, Funktionen aus dem Passenger Service System (PSS), etc. wählen.

Heute im Flugzeug verwendete IFE-Systeme sind auf einer drahtgebundenen Datenkommunikation aufgebaut und weisen aufgrund dessen ein komplexes, drahtgebundenes Kommunikationsnetzwerk auf. Diese Art der Datenkommunikationsverbindung unter Verwendung drahtgebundener Netzwerkknoten innerhalb eines IFE-Systems hat sich in der Vergangenheit bewährt und arbeitet sehr zuverlässig. Bei modernen Flugzeugen, wie Verkehrsflugzeugen, besteht aber stets der Bedarf an gewichtsoptimierten Lösungen, die auch im Komfortbereich und insbesondere im Kabinenbereich des Flugzeuges nicht Halt machen. Darüber hinaus ist man insbesondere bei Datenkommunikationsnetzwerken immer an flexiblen Lösungen interessiert, um den im Kabinenbereich eines Flugzeuges typischerweise vorkommenden Veränderungen des Kabinenlayouts Rechnung zu tragen. Insbesondere bei immer größer werdenden Verkehrsflugzeugen, wie beispielsweise Verkehrsflugzeuge mit einer Kapazität von 500 und mehr Passagieren, ist eine besondere Anforderung darin zu sehen, einerseits die verschiedenen passagierindividuellen Endgeräte flexible an das IFE-System anzukoppeln und andererseits eine sehr verlässliche und damit sichere Datenkommunikation zu gewährleisten.

Die US 2005/0074019 A1 beschreibt ein drahtloses Mesh-Netzwerk mit mehreren Ebenen und ein Datenkommunikationsverfahren, bei dem eine Datenkommunikation zwischen Netzwerkknoten verschiedener Ebenen dieses drahtlosen Ad-hoc-Netzwerkes ermöglicht werden soll. Bei dem in der der US 2005/0074019 A1 beschriebenen mobilen Ad-hoc-Netzwerk sind die einzelnen Netzwerkknoten, die in den verschiedenen Ebenen zueinander gleichberechtigt sind, mobil. Darüber sind die Netzwerkknoten dynamisch, dass heißt sie weisen keine feste Konfiguration auf. Vielmehr ist die Anordnung der Netzwerkknoten variabel und muss für die Datenkommunikation jeweils neu festgelegt, also konfiguriert werden, was bei der Datenkommunikation insgesamt einen erheblichen Konfigurationsaufwand mit sich bringt
Die Europäische Patentanmeldung EP 1 835 662 A1 beschreibt ein Verfahren zur drahtlosen Datenweiterleitung zwischen den Netzwerkknoten eines statischen, hierarchischen, in seiner Konfiguration dynamisch aufgebauten Netzwerk in einem Fahrzeug durch Bereitstellen von Daten, die über eine externe Schnittstelle in eine oberste Netzwerkebene eingekoppelt wird und zu Netzwerkknoten einer untersten Netzwerkebene weitergeleitet werden sollen, Weiterleiten der Daten an einen zur obersten Netzwerkebene benachbarten Netzwerkknoten einer mittleren Netzwerkebene solange, bis dieser sämtliche Daten aufgenommen hat und Weiterleiten der Daten an die jeweils zugeordneten Netzwerkknoten der untersten Netzwerkebene.

Die Europäische Patentanmeldung EP 1 933 534 A1 beschreibt eine Netzwerkarchitektur sowie ein Verfahren zur Datenkommunikation unter Verwendung dieser Netzwerkarchitektur, bei der die Netzwerkarchitektur zumindest zwei Kommunikationsvorrichtungen (Peers) und zumindest zwei leitungsungebundene Zugangsknoten aufweist. Die leistungsungebundenen Zugangsknoten sind derart angeordnet, dass ein Cluster dieser Peers durch zumindest zwei leitungsungebundene Zugangsknoten abgedeckt ist und dass benachbarte kontaktlose Zugangsknoten orthogonale Kanäle verwenden können.

Vor dem Hintergrund der EP 1 933 534 A1 liegt der vorliegenden Erfindung die Aufgabe zugrunde, eine effizient synchronisierte Weiterleitung in einem Mesh-Netzwerk bereitzustellen.

Erfindungsgemäß wird diese Aufgabe durch ein Verfahren mit den Merkmalen des Patentanspruchs 1 gelöst.

Demgemäß ist vorgesehen:
- Ein Verfahren zur Datenkommunikation und insbesondere zur drahtlosen Datenweiterleitung zwischen den Netzwerkknoten eines statischen, hierarchischen, in seiner Konfiguration dynamisch aufgebauten Mesh-Netzwerkes in einem Fahrzeug, mit den Schritten: (a) Bereitstellen von Daten, die über eine externe Schnittstelle in eine oberste Netzwerkebene eingekoppelt wird und die zu Netzwerkknoten einer untersten Netzwerkebene weitergeleitet werden sollen; (b) Weiterleiten der Daten an einen zur obersten Netzwerkebene benachbarten Netzwerkknoten einer mittleren Netzwerkebene solange, bis dieser sämtliche Daten aufgenommen hat; (c) Weiterleiten der Daten von dem Netzwerkknoten der mittleren Netzwerkebene zu zumindest einem diesem benachbarten Netzwerkknoten derselben mittleren Netzwerkebene solange, bis dieser benachbarte Netzwerkknoten sämtliche Daten aufgenommen hat; (d) Wiederholen des Schritts (c) solange, bis alle Netzwerkknoten der mittleren Netzwerkebene die Daten aufgenommen haben; (e) Gleichzeitiges Weiterleiten der Daten von den Netzwerkknoten der mittleren Netzwerkebene an die diesen jeweils zugeordneten Netzwerkknoten der untersten Netzwerkebene.

Die der vorliegenden Erfindung zugrunde liegende Erkenntnis besteht darin, dass bei immer größer werdenden Fahrzeugen und insbesondere bei Großraumpassagierflugzeugen die Hardwarekomponenten innerhalb eines so genannten IFE-Systems immer aufwändiger werden, was insbesondere mit einem steigenden Gewichtszuwachs einhergeht. Der vorliegenden Erfindung liegt nun die Idee zugrunde, die bei bisherigen, konventionellen Datenkommunikationsnetzwerken in Fahrzeugen bekannte Festverdrahtung und der damit einhergehende Hardware-Aufwand durch ein statisches Mesh-Netzwerk mit fest konfigurierten Netzwerkknoten zu ersetzen. Solche Mesh-Netzwerke sind funkbasierte Kommunikationsnetzwerke, die je nach Anwendung miteinander über drahtlose Kommunikationsverbindungen kommunizieren können. Dadurch lässt sich bereits eine signifikante Gewichtsreduzierung bei der Implementierung solcher Kommunikationsnetze in Fahrzeugen realisieren, was insbesondere bei Flugzeugen von besonderem Interesse und Vorteil ist, da dort der Gewichtsreduzierung eine essentielle Bedeutung zukommt.

Im Unterschied zu herkömmlichen drahtlosen Kommunikationsnetzwerken, die auf einer so genannten Star-Topologie basieren, ist eine hierarchische Architektur des Mesh-Netzwerkes mit verschiedenen Netzwerkebenen vorgesehen. Die Netzwerkknoten unterschiedlicher Netzwerkebenen sind nicht gleichberechtigt, d.h. die Netzwerkknoten ranghöherer Netzwerkebenen sind z. B. dominanter als rangniedrigere Netzwerkknoten. Die verschiedenen Netzwerkknoten innerhalb der verschiedenen Netzwerkebenen sind miteinander über konfigurierbare Kommunikationsverbindungen verbunden, sodass eine sehr robuste Datenkommunikation zwischen den einzelnen Netzwerkknoten vorhanden ist, die auch bei einem Ausfall von einem oder mehreren der Netzwerkknoten innerhalb des Mesh-Netzwerkes nach wie vor funktionsfähig bleibt.

Ein weiterer Vorteil bei der Bereitstellung eines Mesh-Netzwerkes liegt darin, dass eine nahezu infrastrukturlose und insbesondere serverlose Netzwerkarchitektur bereitgestellt wird, die mit Ausnahme der Hardware für die Netwerkknoten einen minimalen Aufwand an Hardware und Verbindungsleitungen erfordert und aufgrund dessen sehr kosteneffektiv und Gewicht sparend ist. Darüber hinaus ist aufgrund der drahtlosen Kommunikationsverbindungen eine hohe Flexibilität im Aufbau des statischen Mesh-Netzwerkes gegeben, welches sich je nach Bedarf und Anwendung sehr flexibel an eine Veränderung des Layouts der Netzwerkknoten, insbesondere einer Veränderung des Layouts der Flugzeugkabine, anpassen lässt.

Unter einem Netzwerkknoten ist im Kontext der vorliegenden Beschreibung ein elektronisches Endgerät mit mobiler Kommunikationsfähigkeit in einem Kommunikationsnetzwerk zu verstehen, wie etwa im Falle eines Flugzeuges ein passagierindividuelles Multimediagerät, ein Monitor, ein Personal Television Gerät (PTV-Gerät), ein passagierindividueller Computer, ein Mobilfunktelefon, Personal Digital Assistant (PDAs), ein Notebook oder ein beliebig anderes elektronisches Bauteil mit mobiler Kommunikationsfähigkeit. Ein Netzwerkknoten ist somit ein Oberbegriff für ein Gerät, das zwei oder mehr Übertragungswege, die drahtgebunden oder drahtlos sein können, eines Kommunikationsnetzes miteinander verbindet. Ein gemeinsames Merkmal solcher Netzwerkknoten ist jeweils die Adressierbarkeit.

Vorteilhafte Ausgestaltungen und Weiterbildungen der Erfindung ergeben sich aus den weiteren Unteransprüchen in Zusammenschau mit den Figuren der Zeichnung.

In einer bevorzugten Ausgestaltung sind die Positionen der einzelnen Netzwerkknoten des statischen Netzwerkes über das bekannte Kabinenlayout konfigurierbar und damit veränderbar. Unter einem statischen Netzwerk ist ein solches Netzwerk zu verstehen, welches nicht immer wieder neu aufgebaut und konfiguriert werden muss, wie dies bei mobilen Netzwerken der Fall ist. Dies liegt daran, dass bei einem statischen Netzwerk die Erstkonfiguration des Netzwerkes und das Layout der Umgebung, z.B. einer Flugzeugkabine, bekannt sind. Bei einer örtlichen Veränderung oder Verschiebung sind die neuen Positionen der Netzwerkknoten dennoch über das bekannte Layout festgelegt und müssen damit nicht immer neu konfiguriert werden. Damit liegt über ein bekanntes Layout, z.B. das bekannte Kabinenlayout, bereits eine vorher festgelegte Konfiguration dieser Netzwerkknoten und damit des gesamten statischen Mesh-Netzwerkes vor. Eine aufwändige Hardware zum Neukonfigurieren im Falle einer Veränderung der einzelnen Netzwerkknoten ist damit entbehrlich, was zu einer deutlich vereinfachten Netzwerkarchitektur und vor allem zu einer deutlich schnelleren und vor allem vereinfachten Kommunikation führt.

In einer bevorzugten Ausgestaltung sind die Netzwerkknoten unterschiedlicher Netzwerkebenen physikalisch identisch, d.h. die Netzwerkknoten sind typischerweise identisch im Aufbau ausgebildet und weisen typischerweise jeweils dieselbe Funktionalität auf. Netzwerkknoten unterschiedlicher Netzwerkebenen sind aber logisch verschieden, d.h. Netzwerkknoten unterschiedlicher Netzwerkebenen sind untereinander nicht gleichberechtigt. Vorzugsweise ist die Logik, also der Rang der Netzwerkknoten, z.B. abhängig von der Zuordnung zu einer jeweiligen Netzwerkebene einstellbar, beispielsweise über das Protokoll der Datenkommunikation.

In einer bevorzugten Ausgestaltung bilden miteinander in Daten-kommunikativer Verbindung stehende Netzwerknoten zumindest einer und vorzugsweise aller Netzwerkebene ein drahloses Backbone-Netzwerk. Denkbar wäre auch, wenn lediglich die Netzwerkknoten der ersten und/oder der zweiten Netzwerkebene, also die oberste und/oder die oberen beiden Netzwerkebenen, als Backbone-Netzwerk ausgebildet sind. Unter einem Backbone-Netzwerk oder Basisnetz bezeichnet man einen verbindenden Kernbereich eines Kommunikationsnetzes mit sehr hohen Datenübertragungsraten.

In einer bevorzugten Ausgestaltung bilden miteinander in Daten-kommunikativer Verbindung stehende Netzwerkknoten jeweils kettenförmige Datenkommunikationsverbindung. Die Netzwerkknoten der ersten Netzwerkebene sind möglichst zentral in einer jeweiligen kettenförmigen Datenkommunikationsverbindung angeordnet. Vorzugsweise bilden nur die Netzwerkknoten innerhalb der ersten und zweiten Netzwerkebene eine kettenförmige Datenkommunikationsverbindung aus. Dies ermöglicht eine sehr schnelle Datenkommunikation. Insbesondere werden dadurch auch weiter entfernte Netzwerkknoten sehr schnell erreicht. Darüber hinaus ist natürlich vorteilhaft, wenn im Falle eines Ausfalls eines Netzwerkknotens innerhalb einer kettenförmigen Datenkommunikationsverbindung eine Überbrückung des jeweils ausgefallen Netzwerkknotens hergestellt wird.

In einer bevorzugten Ausgestaltung weist zumindest ein Netzwerkknoten einer in der Hierarchie untergeordneten Netzwerkebene mit zumindest zwei verschiedenen Netzwerkknoten einer entsprechend in der Hierarchie übergeordneten Netzwerkebene eine drahtlose Daten-kommunikative Verbindung auf. Das Mesh-Netzwerk weist also solche Netzwerkknoten auf, deren Funktionalität bedarfsgemäß durch andere Netzwerkknoten übernommen werden kann, wodurch sich eine Redundanz ergibt. Im Falle eines Ausfalls eines Netzwerkknotens, selbst wenn dieser Netzwerkknoten in einer höheren oder selbst in der höchsten Netzwerkebene angeordnet ist, übernimmt dessen Funktionalität, nämlich das Generieren, Empfangen und Weiterleiten von Daten, beispielsweise ein dazu benachbarter Netzwerkknoten, der nicht notwendigerweise in derselben Netzwerkebene angeordnet sein muss. Auf diese Weise ergeben sich eine sehr hohe Ausfallsicherheit und damit eine hohe Verlässlichkeit der Datenkommunikation.

In einer bevorzugten Ausgestaltung weist eine erste, oberste Netzwerkebene zwei und vorzugsweise eine Vielzahl von Netzwerkknoten auf. Dies ist insbesondere dann von Vorteil, wenn beispielsweise das gesamte Mesh-Netzwerk eine Vielzahl verschiedener Netzwerkebenen und insbesondere eine Vielzahl unterschiedlicher Netzwerkknoten, vor allem in der darunter liegenden zweiten Netzwerkebene, aufweist. Insbesondere im Falle, dass die zweite Netzwerkebene eine Vielzahl von Basisnetzwerkknoten aufweist, ist die Bereitstellung von zwei oder mehr Gateway-Netzwerkknoten von Vorteil, um dadurch eine schnellere und effektivere und vor allem robustere Datenweiterleitung bereitzustellen. Dies stellt sicher, dass im Falle eines Ausfalls eines Gateway-Netzwerkknotens dennoch eine effektive und sichere Datenkommunikation mit netzwerkexternen Systemen möglich ist. Im Falle eines IFE-Systems ermöglicht dies, dass ein Passagier trotz Ausfall eines Endgeräts dennoch auf das ihm zugeordnete Endgerät, beispielsweise ein Personal Television, zugreifen kann. Bei herkömmlichen IFE-Systemen fällt hier in der Regel eine ganze Sitzgruppe aus, da die Sitze eine Sitzgruppe unter einander fest verdrahtet sind und es nur eine einzige Schnittstelle zum Kommunikationsnetz gibt. Ein Mesh-Netzwerk verhindert dies und steigert also die Zuverlässigkeit auch auf Sitzebene.

In einer bevorzugten Ausgestaltung weist das Mesh-Netzwerk drei oder mehr unterschiedliche Netzwerkebenen auf, wobei eine erste, oberste Netzwerkebene zumindest einen als Gateway fungierenden Gateway-Netzwerkknoten aufweist, über welchen das Mesh-Netzwerk - darahtlos oder drahtgebunden - an Netzwerk-externe Systeme ankoppelbar ist. Das Mesh-Netzwerk weist ferner eine zweite, mittlere Netzwerkebene mit mehreren Basis-Netzwerkknoten zum Weiterverteilen aufgenommener Daten an Netzwerkknoten anderer oder gleicher Netzwerkebenen auf. Eine dritte, unterste Netzwerkebene weist eine Vielzahl von EndNetzwerkknoten auf, die jeweils mit zumindest einem BasisNetzwerkknoten der zweiten Netzwerkebene drahtlose Datenkommunikative Verbindungen ausbilden. Die Netzwerkknoten, die jeweils mit den Netzwerkknoten in datenkommunikative Verbindung gebracht werden können, bilden das Ende der MeshNetzwerkkette. Die Basisnetzwerkknoten sind dazu ausgelegt, eine Datenkommunikationverbindung einerseits zu den Gateway-Netzwerkknoten und andererseits zu den Netzwerkknoten herzustellen. In einer besonders bevorzugten Ausgestaltung fungieren die Netzwerkknoten der obersten, ersten Netzwerkebene als Gateway zu den Netzwerkknoten der darunter liegenden, zweiten Netzwerkebene und zu anderen Schnittstellensystemen, die nicht notwendigerweise Teil des Mesh-Netzwerkes sind. Vorzugsweise sind der oder die Gateway-Netzwerkknoten innerhalb der obersten Netzwerkebene möglichst zentral in der kettenförmigen Datenkommunikationsverbindung angeordnet. Dies ermöglicht eine sehr effektive und schnelle Datenverteilung von über die Gateway-Netzwerkknoten weitergeleiteten Daten an die Netwerkknoten der darunter angeordneten zweiten Netzwerkebene.

In einer bevorzugten Ausgestaltung sind die verschiedenen End-Netzwerkknoten der dritten Netzwerkebene im Kabinenlayout gleichmäßig verteilt angeordnet. Die Basis-Netzwerkknoten der darüber angeordneten Netzwerkebenen innerhalb des Kabinenlayout sind derart angeordnet, dass mit einer minimalen Anzahl an Basis-Netzwerkknoten eine Daten-kommunikative Verbindung zwischen den Basis-Netzwerkknoten und den End-Netzwerkknoten aufbaubar ist. Dies lässt sich beispielsweise durch eine zick-zackförmige, spiralförmige, mäanderförmige, oder etwa ziehharmonikaförmige Ausgestaltung der durch die BasisNetzwerkknoten erzeugten Datenkommunikationsverbindung realisieren. Die Anzahl der dabei verwendeten Basisnetzwerkknoten hängt im Wesentlichen von der Anzahl und dem Layout der EndNetzwerkknoten innerhalb des Abschnittes und insbesondere innerhalb der Flugzeugkabine ab.

In einer bevorzugten Ausgestaltung weisen die verschiedenen Netzwerkknoten jeweils einen eigenständig arbeitenden Transceiver zum Empfangen und/oder Senden von Daten auf. Ein solcher eigenständig arbeitender Transceiver ist dazu ausgelegt, unabhängig von den Transceivern benachbarter Netzwerkknoten Daten zu empfangen, zu senden und gegebenenfalls innerhalb des Netzwerkknotens mittels einer entsprechenden programmgesteuerten Einrichtung zu bearbeiten.

In einer bevorzugten Ausgestaltung weist zumindest ein Gateway-Netzwerkknoten zusätzlich eine Schnittstelle auf, über welche eine drahtgebundene oder drahtlose Datenkommunikation mit netzwerkexternen Kommunikationseinrichtungen durchführbar ist. Diese Schnittstelle kann vorzugsweise ebenfalls drahtlos sein, wobei auch eine drahtgebundene Datenkommunikation denkbar wäre.

In einer bevorzugten Ausgestaltung sind die Netzwerkknoten in einer Hardware-Einrichtung der Inflight Entertainment-Einrichtung, insbesondere in einer PTV-Einrichtung (Personal TV) oder einer Multimediaeinrichtung, angeordnet. Eine solche Multimediaeinrichtung kann beispielsweise ein für mehrere Sitze in der Flugzeugkabine vorgesehene Überkopf-Multimediaeinrichtung sein. Eine Personal Television-Einrichtung kann z. B. ein in der Rücklehne eines Vordersitzes angeordneter Monitor, Computer, LCD-Bildschirm oder etwa ganz allgemein eine Seat Display Unit (SDU) sein.

In einer bevorzugten Ausgestaltung ist eine PSS-Einrichtung (Passenger Service System) vorgesehen. Die Inflight-Entertainment-Einrichtung ist über die Gateway-Netzwerkknoten mit der PSS-Einrichtung in Daten-kommunikative Verbindung bringbar. Eine solche PSS-Einrichtung ist dazu ausgelegt, dass allgemeine Anfragen, wie etwa eine Nachfrage für einen Flugbegleiter (Flight Attendant Call) und Leselicht, oder flugspezifische Informationen an die Endgeräte der Inflight-Entertainment-Einrichtung weiterleitbar sind. Solche flugspezifischen Informationen, die von den Passagieren gerne über die Inflight-Entertainment-Einrichtung abgerufen werden, sind z. B. die genaue Lage, die Höhe, die Geschwindigkeit des Flugzeuges und dergleichen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand des in den schematischen Figuren der Zeichnung angegebenen Ausführungsbeispiels näher erläutert. Es zeigen dabei:
- Fig. 1: eine Blockschaltbild zur Darstellung der Architektur eines Mesh-Netzwerkes;
- Fig. 2: eine Blockschaltbild zur Darstellung einer schematisierten Flugzeugkabine mit darin vorgesehenem Mesh-Netzwerk;
- Fig. 3: ein Ablaufdiagramm zur Erläuterung eines erfindungsgemäßen Verfahrens zum Betreiben eines Mesh-Netzwerkes.

In den Figuren der Zeichnung sind gleiche und funktionsgleiche Elemente, Merkmale und Komponenten - sofern nichts Anderes ausführt ist - jeweils mit denselben Bezugszeichen versehen.

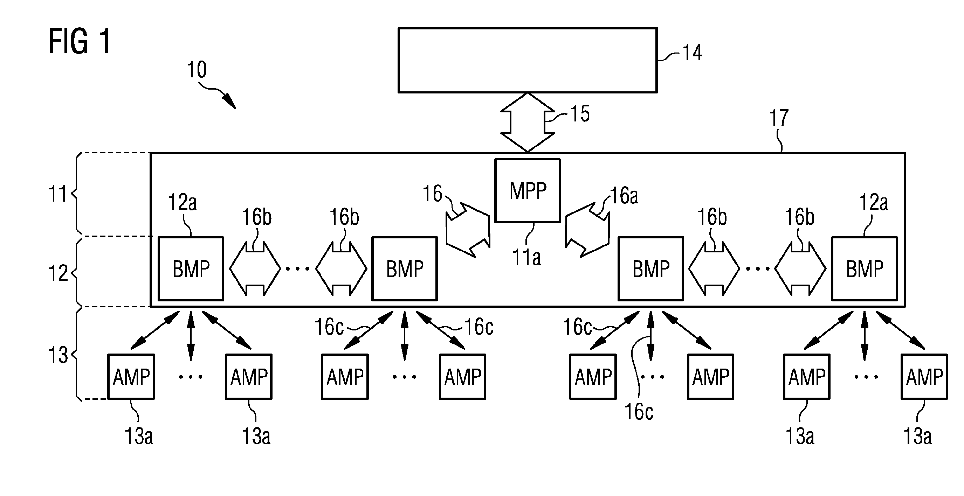

Fig. 1 zeigt ein Blockschaltbild zur Darstellung der Architektur eines Mesh-Netzwerkes. In Fig. 1 ist mit Bezugszeichen 10 ein Mesh-Netzwerk bezeichnet. Nachfolgend sei davon ausgegangen, dass das Mesh-Netzwerk 10 in einem Flugzeug und insbesondere in dessen Flugzeugkabine vorgesehen ist. Das Mesh-Netzwerk 10 dient der Datenkommunikation, wobei das Mesh-Netzwerk hierfür über eine Schnittstelle 15 mit anderen Systemen 14 des Flugzeugs gekoppelt ist. Diese Schnittstelle 15 ist vorzugsweise ebenfalls eine drahtlose Kommunikationsverbindung, wobei auch denkbar wäre, dass diese Schnittstelle 15 eine drahtgebundene Schnittstelle ist.

Das Mesh-Netzwerk 10 ist als statisches Ad-hoc-Netzwerk ausgebildet, welches eine hierarchische Netzwerkarchitektur aufweist. Das hierarchisch aufgebaute Mesh-Netzwerk 10 weist mehrere, übereinander angeordnete Netzwerkebenen, 11, 12, 13 mit ansteigender Hierarchie und damit ansteigendem Rang auf. Ferner weist das Mesh-Netzwerk 10 eine Vielzahl von Netzwerkknoten 11a, 12a, 13a auf, die in den verschiedenen Netzwerkebenen 11, 12, 13 angeordnet sind. Im vorliegenden Fall sind insgesamt drei Netzwerkebenen 11, 12, 13 vorgesehen.

Die erste, oberste Netzwerkebene 11 ist über die Schnittstelle 15 mit Mesh-Netzwerk-externen Flugzeugsystemen 14 gekoppelt. Diese oberste Mesh-Netzwerkebene 11 weist im vorliegenden Ausführungsbeispiel lediglich beispielhaft einen einzigen, so genannten Gateway-Netzwerkknoten 11a auf. Das Mesh-Netzwerk 10 weist ferner eine zweite, mittlere Netzwerkebene 12 auf, die eine Vielzahl verschiedener so genannter Basisnetzwerkknoten 12a aufweist. Ferner weist das Mesh-Netzwerk 10 eine dritte, unterste Netzwerkebene 13 auf, die eine Vielzahl von so genannten Endnetzwerkknoten 13a aufweist. Die zweite Netzwerkebene 12 ist zwischen der ersten und dritten Netzwerkebene 11, 13 angeordnet und dient der Weiterleitung von Daten der ersten Netzwerkebene 11 zu der dritten Netzwerkebene 13 und umgekehrt. Die zweite Netzwerkebene 12 fungiert somit gewissermaßen als Datenpuffer.

Nachfolgend wird kurz auf die Funktionalität der verschiedenen Netzwerkknoten 11a, 12a, 13a und der entsprechenden Netzwerkebenen 11, 12, 13 eingegangen:
Jeder Netzwerkknoten 11a, 12a, 13a des Mesh-Netzwerkes 10 ist dazu ausgelegt, Daten zu empfangen oder weiterzuleiten. Darüber hinaus kann auch jeder Netzwerkknoten 11a, 12a, 13a dazu ausgelegt sein, Daten zu erzeugen oder Daten zu bearbeiten, um diese bearbeiteten Daten dann weiterzuleiten. Diese Daten können alle denkbaren digitalen Informationen enthalten. Im konkreten Fall des IFE-Systems können diese Daten z.B. Steuerbefehle von einem so genannten Passenger-Service-System (PSS) sein, welche über die Kommunikationseinrichtung der Flugzeugkabine aufgenommen werden. Solche Steuerbefehle können beispielsweise das Aktivieren einer Passagierbeleuchtung, das Rufen eines Flugbebleiters und dergleichen sein.

Die Gateway-Netzwerkknoten 11a, die auch als MPP-Netzwerkknoten (MPP = Mesh Point Portal) bezeichnet werden, fungieren als Gateway zu der zweiten Netzwerkebene 12 sowie als Schnittstelle zu netzwerkexternen Systemen 14, wie etwa dem PSS System. Die Basis-Netzwerkknoten 12a, die auch als BMP-Netzwerkknoten (Backbone Mesh Points) bezeichnet werden, sind sowohl mit den Basisnetzwerkknoten 11a derselben zweiten Netzwerkebene 12 sowie den Endnetzwerkknoten 13a der ersten und dritten Netzwerkebene 11, 13 in datenkommunikativer Verbindung. Die Gateway-Netzwerkknoten 11a und Basisnetzwerkknoten 12a sind im gezeigten Ausführungsbeispiel der Fig. 1 in einer so genannten Backbone-Kommunikationskette 17 angeordnet, wobei hier der Gateway-Netzwerkknoten 11a im Wesentlichen im zentralen Bereich dieser Backbone-Kommunikationskette angeordnet ist. Die Endnetzwerkknoten 13a, die auch als AMP-Netzwerkknoten (Associated Mesh Points) bezeichnet werden, bilden das Ende des Netzwerkes 10.

Die drahtlose Datenkommunikationsverbindung zwischen dem Gateway-Netzwerkknoten 11a und den jeweils benachbarten Basisnetzwerkknoten 12a innerhalb der Backbone-Kommunikationskette 17 ist mit Bezugszeichen 16a bezeichnet. Darüber hinaus sind diese Basisnetzwerkknoten 12a über entsprechende drahtlose Kommunikationsverbindungen 16b auch mit entsprechend benachbarten Basisnetzwerkknoten 16b innerhalb derselben Backbone-Kommunikationskette 17 verbunden. Schließlich sind die Basisnetzwerkknoten 12a über drahtlose Kommunikationsverbindungen 16c auch mit jeweiligen Endnetzwerkknoten 13a der untersten Netzwerkebene 13 verbunden.

Für die Datenkommunikation der verschiedenen Netzwerkknoten 11a - 13a lassen sich bekannte drahtlose Kommunikationsprotokolle einsetzen, wie etwa ein Standard der IEEE 802.11-Familie und hier insbesondere der Standard IEEE 802.11n oder IEEE 802.11s. Eine geeignete Kombination dieser Kommunikationsstandards ermöglicht eine drahtlose, nahezu hardwarereduzierte Kommunikationsinfrastruktur für dieses Mesh-Netzwerk 10, da bereits jedes der Endgeräte und damit jeder Netzwerkknoten 11a - 13a die erforderliche Funktionalität im Hinblick auf das Empfangen und Weiterleiten enthält.

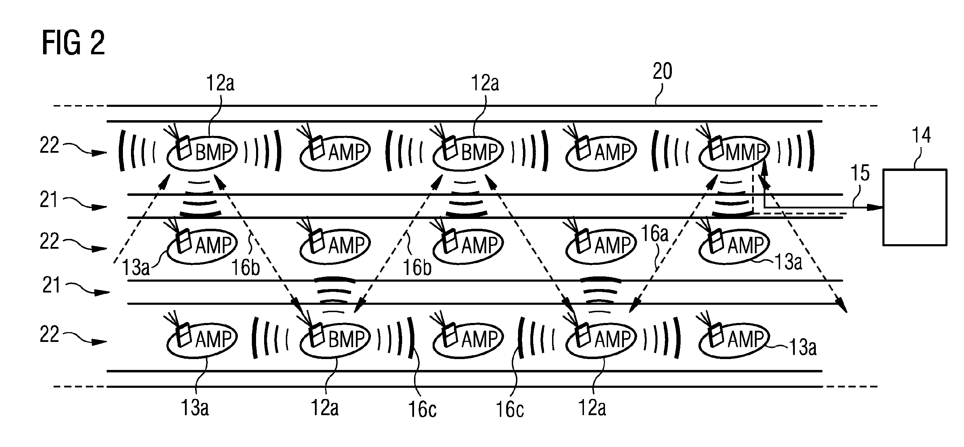

Fig. 2 zeigt ein Blockschaltbild zur Darstellung einer schematisierten Flugzeugkabine mit einem darin vorgesehenen Mesh-Netzwerk. In Fig. 2 ist mit Bezugszeichen 20 ein Ausschnitt einer Flugzeugkabine bezeichnet. Diese Flugzeugkabine 20 weist eine Vielzahl von nebeneinander angeordneten, lediglich schematisch angedeuteten Sitzplätzen für die Flugzeugpassagier auf, wobei diese Sitzplätze in einer an sich bekannten, regelmäßigen Art und Weise hintereinander und nebeneinander angeordnet sind. Im vorliegenden Fall weist die Flugzeugkabine ein Layout der Flugzeugstühle auf, die zwei Zwischengänge zwischen den Flugzeugstühlen (so genannter Twin-Aisle Rumpf) aufweist. Die beiden Mittelgänge sind mit Bezugszeichen 21 bezeichnet und die jeweiligen Sitzreihen mit Bezugszeichen 22.

Es sei angenommen, dass jedem Flugzeugstuhl ein Endgerät 11a, 12a, 13a, beispielsweise eine so genannte SDU-Einrichtung oder eine PTV-Einrichtung zugeordnet ist. Diese Endgeräte sind typischerweise in der Rücklehne des jeweiligen Vordersitzes in bekannter Weise angeordnet. In Fig. 2 sind der besseren Übersichtlichkeit halber lediglich einige dieser Endgeräte 11a, 12a, 13a dargestellt. Wesentlich ist allerdings, dass die Mehrzahl der Endgeräte als so genannte AMP-Netzwerkknoten 13a ausgebildet sind. Ferner sind eine geringere Anzahl an Endgeräten als so genannte BMP-Netzwerkknoten 12a ausgebildet und ein Endgerät ist als so genannter MPP-Netzwerkknoten 11a ausgebildet. Die BMP-Netzwerkknoten 12a und MPP-Netzwerkknoten 11a sind über eine drahtlose Backbone-Kommunikationskette miteinander gekoppelt. Wesentlich ist ferner, dass diese Backbone-Kommunikationskette im vorliegenden Fall in etwa zick-zackförmig ausgebildet ist. Dies wird dadurch erreicht, dass abwechselnd ein BMP-Netzwerkknoten 12a auf der linken Flugzeugseite und ein in der Kommunikationskette nachfolgender BMP-Netzwerkknoten 12a auf der rechten Seite der Flugzeugkabine 20 angeordnet ist. Dies setzt sich dann in der gesamten Flugzeugkabine 20 von vorne nach hinten fort. Auf diese Weise, d. h. über die so ausgebildete zickzackförmige Kommunikationsverbindung, wird sichergestellt, dass für alle AMP-Netzwerkknoten 13a zumindest ein übergeordneter Netzwerkknoten 11a, 12a, beispielsweise ein BMP-Netzwerkknoten 12a, in der Nähe befindlich ist, mit dem diese AMP-Netzwerkknoten 13a über die drahtlose Kommunikationsverbindung 16c kommunizieren können.

In Fig. 2 ist ferner dargestellt, dass diverse AMP-Netzwerkknoten 13a auch in der Lage sind, mit verschiedenen BMP-Netzwerkknoten 12a der darüber liegenden Netzwerkebene 12 zu kommunizieren. Dies ist durch das Datenkommunikationsprotokoll nicht ausgeschlossen und ist sogar für eine verlässliche und robuste Datenkommunikation von Vorteil, da im Falle eines ausgefallenen, übergeordneten BMP-Netzwerkknotens 12a die Datenkommunikation über einen anderen BMP-Netzwerkknoten 12a erfolgen kann.

In dem Ausführungsbeispiel in Fig. 2 ist lediglich beispielhaft ein einziger MPP-Netzwerkknoten 11a, der als Gateway zu netzwerkexternen System fungiert, dargestellt. Es versteht sich von selbst, dass in der drahtlosen Backbone-Kommunikationskette auch mehr als lediglich ein MPP-Netzwerkknoten 11a vorgesehen sein kann, was insbesondere im Hinblick auf die Redundanz und Ausfallsicherheit von Vorteil ist.

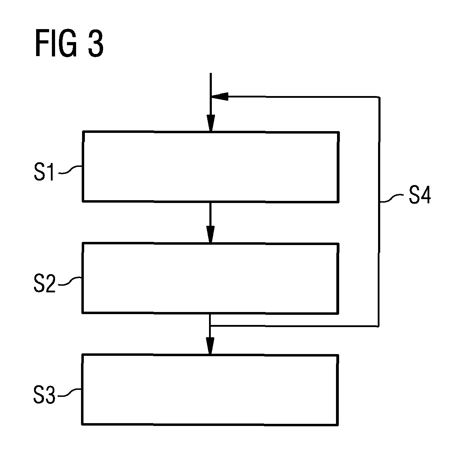

Fig. 3 zeigt ein Ablaufdiagramm zur Erläuterung eines erfindungsgemäßen Verfahrens zum Betreiben eines Mesh-Netzwerkes.

Um die Daten, beispielsweise Steuerdaten, Adressdaten oder Dateninformationen, innerhalb des Mesh-Netzwerks 10 zur besseren Handhabung an die jeweiligen Netzwerkknoten zu verteilen, ist erfindungsgemäß eine diskontinuierliche Datenübertragung vorgesehen. Diese diskontinuierliche Datenübertragung basiert auf der Basis eines so genannten Zwischenspeichern- und Weiterleiten-Prinzips, bei dem Daten von einem übergeordneten Netzwerkknoten zunächst aufgenommen und zwischengespeichert werden, bevor sie dann an einen benachbarten Netzwerkknoten weitergeleitet werden. Das nachfolgend dargestellte erfindungsgemäße Verfahren umfasst die folgenden Schritte:

### Schritt S1:

Im ersten Schritt nimmt der BMP-Netzwerkknoten 12a, der neben einem MPP-Netzwerkknoten 11a angeordnet ist, Daten auf. Diese aufgenommenen Daten werden dem BMP-Netwerkknoten 12a über eine externe Schnittstelle 15 und dem MPP-Netzwerkknoten 11a zugeführt.

### Schritt S2:

Sobald diese Datenübertragung zu dem BMP-Netzwerkknoten abgeschlossen ist, leitet dieser BMP-Netzwerkknoten 12a die Daten zu dem nächstmöglichen, benachbarten BMP-Netzwerkknoten 12a weiter.

### Schritt S3:

Sofern jeder BMP-Netzwerkknoten 12a der zweiten Netzwerkebene 12 die über die externe Schnittstelle 15 eingekoppelten Daten vorliegen hat, leiten alle BMP-Netzwerkknoten 12a jeweils individuell diese Daten zu entsprechenden AMP-Netzwerkknoten 13a in der Backbone-Kette weiter. Auf diese Weise wird sichergestellt, dass sämtliche AMP-Netzwerkknoten 13a die jeweiligen Daten - zu demselben Zeitpunkt - erhalten.

Die Datenübertragung von den BMP-Netzwerkknoten 12a zu den AMP-Netzwerkknoten 13a erfolgt gleichzeitig und parallel zu der Datenübertragung innerhalb der Backbone-Kommunikationskette und reduziert auf diese Weise die gesamte Datenübertragungszeit in dem Mesh-Netzwerk. Das eben beschriebene Verfahren zeichnet sich somit durch eine sehr hohe Zeiteffizienz der Datenübertragung aus.

Gleichzeitig bedeutet hier in dem Sinne, dass ein Netzwerkknoten 12a der mittleren Ebene 12, der bereits die Daten vollständig erhalten und weitergeleitet hat, diese an seine "Clients" überträgt, wahrend die anderen Übertragungen in der mittleren Ebene 12 weitergehen.

Für den Fall, dass das Mesh-Netzwerk mehr als drei Netzwerkebenen 11-13 aufweist, fungieren sämtliche, mittleren Netzwerkebenen 12 als BMP-Netzwerkebenen 12. Die dort vorgesehenen BMP-Netzwerkknoten 12a nehmen die Daten entsprechend der Schritte 1 und 2 auf. Erst wenn sämtliche BMP-Netzwerkknoten 12a der untersten BMP-Netzwerkebene 12 vollständige Daten aufweisen, wird der Schritt 3 durchgeführt.

Die vorliegende Erfindung sei nicht auf die vorstehenden konkreten oder abstrakten Ausführungsbeispiele beschränkt, sondern lässt sich auf beliebige Art und Weise modifizieren, ohne vom Gegenstand der vorliegenden Erfindung abzuweichen.

Die Begriffe vorne und hinten, links und rechts beziehen sich in der gesamten Beschreibung auf die Flugrichtung bzw. die Ausrichtung eines Flugzeugs.

Im Falle der Hierarchie der Netzwerkebenen oder Netzwerkknoten beziehen sich die Begriffe oben und unten stets auf ranghöhere bzw. rangniedrigere Netzwerkebenen oder Netzwerkknoten.

Wenngleich die vorliegende Erfindung vorstehend anhand eines als Mesh-Netzwerk ausgebildeten Datenkommunikationsnetzes in einer Flugzeugkabine beschrieben wurde, welches genau drei Netzwerkebenen aufweist, ist die Erfindung nicht dahingehend beschränkt, sondern lässt sich beispielsweise auch mit lediglich zwei Netzwerkebenen oder mehr als drei Netzwerkebenen vorteilhaft implementieren. Insbesondere wäre denkbar, dass bei sehr großen Passagierflugzeugen, die z. B. auch mehrere Passagierdecks aufweisen, möglicherweise mehr als drei Netzwerkebenen vorgesehen sind, um dadurch eine noch flexiblere und effektivere und vor allem schnellere Datenkommunikation zwischen den verschiedenen Netzwerkebenen des Kommunikationsnetzwerks bereitzustellen. Insbesondere orientiert sich damit die Anzahl der Netzwerkebenen innerhalb der Hierarchie des Kommunikationsnetzwerkes im Wesentlichen an der Gesamtzahl der verwendeten Netzwerkknoten und dabei insbesondere an der Anzahl der in der Fahrzeugkabine vorgesehenen Endgeräte bzw. Passagiere, die sich solcher Netzwerkknoten bzw. der entsprechenden Endgeräte bedienen.

Wenngleich die vorliegende Erfindung im Zusammenhang mit einem als Passagierflugzeug ausgebildeten Verkehrsflugzeug beschrieben ist, sei die Erfindung nicht dahingehend beschränkt, sondern ließe sich beispielsweise auch bei anderen Flugzeugen vorteilhaft einsetzen. Denkbar wäre auch der Einsatz der Erfindung in anderen Fahrzeugen mit derartigen Entertainmentsystemen, wie etwa modernen Omnibusfahrzeugen für den Personenverkehr, Passagierfähren, Zugabteile und dergleichen. Auch Entertainmentsysteme in Wartesälen von Bahnhöfen, Flughäfen oder dergleichen wären ein denkbarer Einsatzort solcher Kommunikationseinrichtungen.

Wenngleich es vorteilhaft ist, dass die Netzwerkknoten der verschiedenen Netzwerkebenen in Form einer so genannten Backbone-Kette angeordnet sind, ist die Erfindung nicht dahingehend beschränkt. Vielmehr wäre es denkbar, dass die verschiedenen Netzwerkknoten auf andere Weise und nicht notwendigerweise in einer durchgehend kettenförmigen Datenkommunikationsverbindung zueinander angeordnet sind. Insbesondere wäre auch denkbar, dass die verschiedenen Netzwerkknoten innerhalb einer Netzwerkebene zueinander vernetzt ausgebildet sind, was eine flexiblere und effektivere Datenkommunikation der verschiedenen Netzwerkknoten einer Netzwerkebene ermöglicht und was insbesondere im Falle eines Ausfalls eines Netzwerkknotens gewährleistet, dass die Datenkommunikation zwischen den Netzwerkknoten einer jeweiligen Netzwerkebene aufrecht erhalten bleibt.

In der vorliegenden Beschreibung wurde stets davon ausgegangen, dass lediglich die Netzwerkknoten der höchsten Netzwerkebene eine Schnittstelle zu einer netzwerkexternen Kommunikationseinrichtung des Flugzeugs aufweist. Dies ist allerdings kein notwendiges Erfordernis. Vielmehr wäre auch denkbar, dass einzelne oder etwa auch alle Netzwerkknoten eine solche Schnittstelle aufweisen, die zumindest die Möglichkeit eröffnen, mit einer netzwerkexternen Kommunikationseinrichtung zu kommunizieren, wobei die Kommunikation hier auch auf das bloße Senden und/oder Empfangen von Statusinformationen beschränkt sein könnte. Die netzwerkexterne Kommunikationseinrichtung könnte auf diese Weise sehr frühzeitig darüber informiert sein, dass einzelne Netzwerkknoten beispielsweise eine eingeschränkte Funktionalität aufweisen oder etwa auch ausgefallen sind.

Weitere Ausführungsformen sind:
1. Statisches Mesh-Netzwerk (10) in oder für eine Kabine (20) eines Fahrzeugs, insbesondere ein Flugzeug, wobei die Kabine (20) ein vorgegebenes, bekanntes Kabinenlayout aufweist,
   mit einer Vielzahl von zueinander hierarchisch angeordneten Netzwerkebenen (11-13), wobei jeweils in der Hierarchie benachbarte Netzwerkebenen (11-13) in drahtloser kommunikativer Verbindung zueinander stehen,
   mit einer Vielzahl von voneinander unabhängig arbeitender Netzwerkknoten (11a-13a), deren Position im Kabinenlayout durch die Konfiguration eines jeweiligen Netzwerkknotens (11a-13a) fest vorgegeben ist, wobei die Netzwerkknoten (11a-13a) innerhalb einer jeweiligen Netzwerkebene (11-13) eine gleichberechtigte Logik aufweisen.
2. Netzwerk nach Ausführungsform 1,
   **dadurch gekennzeichnet,**
   dass die Positionen der Netzwerkknoten (11a-13a) im Kabinenlayout konfigurierbar und damit veränderbar sind.
3. Netzwerk nach einer der vorhergehenden Ausführungsformen,
   **dadurch gekennzeichnet,**
   dass die Netzwerkknoten (11a-13a) unterschiedlicher Netzwerkebenen (11-13) physikalisch identisch und logisch verschieden ausgebildet sind.
4. Netzwerk nach einer der vorhergehenden Ausführungsformen,
   **dadurch gekennzeichnet,**
   dass die Logik der Netzwerkknoten (11a-13a) einstellbar ist.
5. Netzwerk nach einer der vorhergehenden Ausführungsformen,
   **dadurch gekennzeichnet,**
   dass miteinander in Daten-kommunikativer Verbindung stehende Netzwerkknoten (11a-13a) zumindest einer Netzwerkebene (11-13) und vorzugsweise aller Netzwerkebenen (11-13) ein drahtlosen Backbone-Netzwerk (17) ausbilden.
6. Netzwerk nach einer der vorhergehenden Ausführungsformen,
   **dadurch gekennzeichnet,**
   dass miteinander in Daten-kommunikativer Verbindung stehende Netzwerkknoten (11a-13a) jeweils kettenförmige Datenkommunikationsverbindung (16a-16c) ausbilden, wobei die Netzwerkknoten (11a-13a) der ersten Netzwerkebene (11) möglichst zentral in einer jeweiligen kettenförmigen Datenkommunikationsverbindung (16a) angeordnet sind.
7. Netzwerk nach einer der vorhergehenden Ausführungsformen,
   **dadurch gekennzeichnet,**
   dass zumindest ein Netzwerkknoten (11a-13a) einer untergeordneten Netzwerkebene (11-13) mit zumindest zwei verschiedenen Netzwerkknoten (11a-13a) einer entsprechend übergeordneten Netzwerkebene (11-13) eine drahtlose Daten-kommunikative Verbindung (16a-16c) aufweist.
8. Netzwerk nach einer der vorhergehenden Ausführungsformen,
   **dadurch gekennzeichnet,**
   dass eine erste, oberste Netzwerkebene (11) zwei und vorzugsweise eine Vielzahl von Netzwerkknoten (11a-13a) aufweist.
9. Netzwerk nach einer der vorhergehenden Ausführungsformen,
   **dadurch gekennzeichnet,**
   dass das Mesh-Netzwerk (10) drei oder mehr unterschiedliche Netzwerkebenen (11-13) aufweist,
   - wobei eine erste, oberste Netzwerkebene (11) zumindest einen Gateway-Netzwerkknoten (11a) aufweist, über welchen das Mesh-Netzwerk (10) an Netzwerk-externe Systeme (14) ankoppelbar ist,
   - wobei eine zweite, mittlere Netzwerkebene (12) mehrere Basis-Netzwerkknoten (12a) zum Weiterverteilen aufgenommener Daten aufweist,
   - wobei eine dritte, unterste Netzwerkebene (13) eine Vielzahl von End-Netzwerkknoten (13a) aufweist, die jeweils mit zumindest einem Basis-Netzwerkknoten (12a) eine drahtlose Daten-kommunikative Verbindungen (16c) ausbilden.
10. Netzwerk nach Ausführungsform 9,
   **dadurch gekennzeichnet,**
   dass die End-Netzwerkknoten (13a) der dritten Netzwerkebene (13) im Kabinenlayout gleichmäßig verteilt angeordnet sind und dass die Basis-Netzwerkknoten (12a) der darüber angeordneten Netzwerkebenen (11, 12) innerhalb des Kabinenlayout derart angeordnet sind, dass mit einer minimalen Anzahl an Basis-Netzwerkknoten (12a) eine Daten-kommunikative Verbindung (16b, 16c) zwischen den Basis-Netzwerkknoten (12a) und den End-Netzwerkknoten (13a) aufbaubar ist.
11. Netzwerk nach einer der vorhergehenden Ausführungsformen,
   **dadurch gekennzeichnet,**
   dass die Netzwerkknoten (11a-13a) jeweils einen eigenständig arbeitenden Transceiver zum Empfangen und/oder Senden von Daten aufweist.
12. Flugzeug, insbesondere Passagierflugzeug,
   mit einer Flugzeugkabine (20), die mit einer Inflight Entertainment-Einrichtung ausgestattet ist, wobei die Inflight Entertainment-Einrichtung ein Mesh-Netzwerk (10) nach einer der Ausführungsformen 1 bis 11 aufweist.
13. Flugzeug nach Ausführungsform 12,
   **dadurch gekennzeichnet,**
   dass die Netzwerkknoten (11a-13a) in einer Hardware-Einrichtung der Inflight Entertainment-Einrichtung oder einer Multimediaeinrichtung angeordnet sind.
14. Flugzeug nach einer der Ausführungsformen 12 oder 13,
   **dadurch gekennzeichnet,**
   dass eine PSS-Einrichtung vorgesehen ist und dass die Inflight-Entertainment-Einrichtung über die Gateway-Netzwerkknoten (11a) mit der PSS-Einrichtung in datenkommunikative Verbindung bringbar ist.
15. Verfahren zur Datenkommunikation und insbesondere zur drahtlosen Datenweiterleitung zwischen den Netzwerkknoten (11a-13a) eines statischen, hierarchischen, in seiner Konfiguration dynamisch aufgebauten Mesh-Netzwerks (10) in einem Fahrzeug, insbesondere eines Mesh-Netzwerks (10) nach einer der Ausführungsformen 1 bis 11, mit den Schritten:
   (a) Bereitstellen von Daten, die über eine externe Schnittstelle (14) in eine oberste Netzwerkebene (11) eingekoppelt wird und zu Netzwerkknoten (11a-13a) einer untersten Netzwerkebene (13) weitergeleitet werden sollen;
   (b) Weiterleiten (S1) der Daten an einen zur obersten Netzwerkebene (11) benachbarten Netzwerkknoten (11a-13a) einer mittleren Netzwerkebene (12) solange, bis dieser sämtliche Daten aufgenommen hat;
   (c) Weiterleiten (S2) der Daten von dem Netzwerkknoten (12a) der mittleren Netzwerkebene (12) zu zumindest einem diesem benachbarten Netzwerkknoten (12a) derselben mittleren Netzwerkebene (12) solange, bis dieser benachbarte Netzwerkknoten (12a) sämtliche Daten aufgenommen hat;
   (d) Wiederholen (S4) des Schritts (c) solange, bis alle Netzwerkknoten (12a) der mittleren Netzwerkebene (12) die Daten aufgenommen haben;
   (e) Gleichzeitiges Weiterleiten (S3) der Daten von den Netzwerkknoten (12a) der mittleren Netzwerkebene (12) an die diesen jeweils zugeordneten Netzwerkknoten (13a) der untersten Netzwerkebene (13).

### Bezugszeichenliste

- 10: Mesh-Netzwerk
- 11: erste/oberste Netzwerkebene
- 11a: Gateway-Netzwerkknoten, MPP-Netzwerkknoten
- 12: zweite/mittlere Netzwerkebene
- 12a: Basisnetzwerkknoten, BMP-Netzwerkknoten
- 13: dritte/unterste Netzwerkebene
- 13a: Endnetzwerkknoten, AMP-Netzwerkknoten
- 14: Flugzeugsysteme
- 15: Schnittstelle
- 16a - 16c: drahtlose Kommunikationsverbindungen
- 17: Backbone-Kommunikationskette, Backbone-Netzwerk
- 20: Flugzeugkabine
- 21: Zwischengänge
- 22: Sitzreihen

- S1 - S4: Verfahrensschritte

## Patentansprüche

1. Verfahren zur Datenkommunikation und insbesondere zur drahtlosen Datenweiterleitung zwischen den Netzwerkknoten (11a-13a) eines statischen, hierarchischen, in seiner Konfiguration dynamisch aufgebauten Mesh-Netzwerks (10) in einem Fahrzeug mit den Schritten:
(a) Bereitstellen von Daten, die über eine externe Schnittstelle (14) in eine oberste Netzwerkebene (11) eingekoppelt werden und zu Netzwerkknoten (11a-13a) einer untersten Netzwerkebene (13) weitergeleitet werden sollen;
(b) Weiterleiten (S1) der Daten an einen zur obersten Netzwerkebene (11) benachbarten Netzwerkknoten (11a-13a) einer mittleren Netzwerkebene (12) solange, bis dieser sämtliche Daten aufgenommen hat;
(c) Weiterleiten (S2) der Daten von dem Netzwerkknoten (12a) der mittleren Netzwerkebene (12) zu zumindest einem diesem benachbarten Netzwerkknoten (12a) derselben mittleren Netzwerkebene (12) solange, bis dieser benachbarte Netzwerkknoten (12a) sämtliche Daten aufgenommen hat;
(d) Wiederholen (S4) des Schritts (e) solange, bis alle Netzwerkknoten (12a) der mittleren Netzwerkebene (12) die Daten aufgenommen haben;
(e) Gleichzeitiges Weiterleiten (S3) der Daten von den Netzwerkknoten (12a) der mittleren Netzwerkebene (12) an die diesen jeweils zugeordneten Netzwerkknoten (13a) der untersten Netzwerkebene (13).

2. Verfahren nach Anspruch 1,
**dadurch gekennzeichnet,**
**dass** die Netzwerkknoten (11a-13a) unterschiedlicher Netzwerkebenen (11-13) physikalisch identisch und logisch verschieden ausgebildet sind.

3. Verfahren nach einem der vorhergehenden Ansprüche,
**dadurch gekennzeichnet,**
**dass** die Logik der Netzwerkknoten (11a-13a) einstellbar ist.

4. Verfahren nach einem der vorhergehenden Ansprüche,
**dadurch gekennzeichnet,**
**dass** miteinander in Daten-kommunikativer Verbindung stehende Netzwerkknoten (11a-13a) zumindest einer Netzwerkebene (11-13) und vorzugsweise aller Netzwerkebenen (11-13) ein drahtloses Backbone-Netzwerk (17) ausbilden.

5. Verfahren nach einem der vorhergehenden Ansprüche,
**dadurch gekennzeichnet,**
**dass** miteinander in Daten-kommunikativer Verbindung stehende Netzwerkknoten (11a-13a) jeweils kettenförmige Datenkommunikationsverbindung (16a-16c) ausbilden, wobei die Netzwerkknoten (11a-13a) der ersten Netzwerkebene (11) möglichst zentral in einer jeweiligen kettenförmigen Datenkommunikationsverbindung (16a) angeordnet sind.

6. Verfahren nach einem der vorhergehenden Ansprüche,
**dadurch gekennzeichnet,**
**dass** zumindest ein Netzwerkknoten (11a-13a) einer untergeordneten Netzwerkebene (11-13) mit zumindest zwei verschiedenen Netzwerkknoten (11a-13a) einer entsprechend übergeordneten Netzwerkebene (11-13) eine drahtlose Daten-kommunikative Verbindung (16a-16c) aufweist.

7. Verfahren nach einem der vorhergehenden Ansprüche,
**dadurch gekennzeichnet,**
**dass** eine erste, oberste Netzwerkebene (11) zwei und vorzugsweise eine Vielzahl von Netzwerkknoten (11a-13a) aufweist.

8. Verfahren nach einem der vorhergehenden Ansprüche,
**dadurch gekennzeichnet,**
**dass** das Mesh-Netzwerk (10) drei oder mehr unterschiedliche Netzwerkebenen (11-13) aufweist,
- wobei eine erste, oberste Netzwerkebene (11) zumindest einen Gateway-Netzwerkknoten (11a) aufweist, über welchen das Mesh-Netzwerk (10) an Netzwerk-externe Systeme (14) ankoppelbar ist,
- wobei eine zweite, mittlere Netzwerkebene (12) mehrere Basis-Netzwerkknoten (12a) zum Weiterverteilen aufgenommener Daten aufweist,
- wobei eine dritte, unterste Netzwerkebene (13) eine Vielzahl von End-Netzwerkknoten (13a) aufweist, die jeweils mit zumindest einem Basis-Netzwerkknoten (12a) eine drahtlose Daten-kommunikative Verbindungen (16c) ausbilden.

9. Verfahren nach Anspruch 8,
**dadurch gekennzeichnet,**
**dass** die End-Netzwerkknoten (13a) der dritten Netzwerkebene (13) im Kabinenlayout gleichmäßig verteilt angeordnet sind und dass die Basis-Netzwerkknoten (12a) der darüber angeordneten Netzwerkebenen (11, 12) innerhalb des Kabinenlayout derart angeordnet sind, dass mit einer minimalen Anzahl an Basis-Netzwerkknoten (12a) eine Daten-kommunikative Verbindung (16b, 16c) zwischen den Basis-Netzwerkknoten (12a) und den End-Netzwerkknoten (13a) aufbaubar ist.

10. Verfahren nach einem der vorhergehenden Ansprüche,
**dadurch gekennzeichnet,**
**dass** die Netzwerkknoten (11a-13a) Daten jeweils über einen eigenständig arbeitenden Transceiver empfangen und/oder senden.

## Claims

1. Method for data communication and in particular for wireless data routeing between the network nodes (11a-13a) of a static, hierarchical mesh network (10), formed with a dynamic configuration, in a vehicle, comprising the steps of:
(a) providing data, which are coupled into an uppermost network level (11) via an external interface (14) and are to be routed to network nodes (11a-13a) of a lowest network level (13);
(b) routeing (S1) the data to a network node (11a-13a), adjacent to the uppermost network level (11), of a middle network level (12), until said node has received all of the data;
(c) routeing (S2) the data from the network node (12a) of the middle network level (12) to at least one network node (12a) adjacent thereto of the same middle network level (12), until said adjacent network node (12a) has received all of the data;
(d) repeating (S4) step (e) until all of the network nodes (12a) of the middle network level (12) have received the data;
(e) simultaneously routeing (S3) the data from the network nodes (12a) of the middle network level (12) to the network nodes (13a) respectively assigned thereto of the lowest network level (13).

2. Method according to claim 1,
**characterised in that**
the network nodes (11a-13a) of different network levels (11-13) are formed physically identically and logically differently.

3. Method according to either of the preceding claims, **characterised in that**
the logic of the network nodes (11a-13a) is adjustable.

4. Method according to any of the preceding claims,
**characterised in that**
network nodes (11a-13a) which are in a data-communicating connection with one another, of at least one network level (11-13) and preferably all network levels (11-13), form a wireless backbone network (17).

5. Method according to any of the preceding claims,
**characterised in that**
network nodes (11a-13a) which are in a data-communicating connection with one another form a chain-like data communication connection (16a-16c) in each case, the network nodes (11a-13a) of the first network level (11) being arranged as centrally as possible in a respective chain-like data communication connection (16a).

6. Method according to any of the preceding claims,
**characterised in that**
at least one network node (11a-13a) of a subordinate network level (11-13) has a wireless data-communicating connection (16a-16c) with at least two different network nodes (11a-13a) of a correspondingly superordinate network level (11-13).

7. Method according to any of the preceding claims,
**characterised in that**
a first, uppermost network level (11) comprises two and preferably a plurality of network nodes (11a-13a).

8. Method according to any of the preceding claims,
**characterised in that**
the nesh network (10) comprises three or more different network levels (11-13),
- a first, uppermost network level (11) comprising at least one gateway network node (11a) via which the mesh network (10) can be coupled to systems (14) external to the network,
- a second, middle network level (12) comprising a plurality of base network nodes (12a) for passing on received data,
- a third, lowermost network level (13) comprising a plurality of terminal network nodes (13a), which each form a wireless data-communicating connection (16c) with at least one base network node (12a).

9. Method according to claim 9,
**characterised in that**
the terminal network nodes (13a) of the third network level (13) are arranged uniformly distributed in the cabin layout, and **in that** the base network nodes (12a) of the network levels (11, 12) above this are arranged within the cabin layout in such a way that a data-communicating connection (16b, 16c) can be established between the base network nodes (12a) and the terminal network nodes (13a) using a minimum number of base network nodes (12a).

10. Method according to any of the preceding claims,
**characterised in that**
the network nodes (11a-13a) each receive and/or transmit data via an independently operating transceiver.

## Revendications

1. Procédé de communication de données et en particulier de transfert de données sans fil entre les noeuds (11a-13a) d'un réseau maillé statique hiérarchique (10) agencé de manière dynamique dans sa configuration dans un véhicule, comprenant les étapes consistant à :
(a) fournir des données qui sont couplées par une interface externe (14) dans un premier niveau de réseau supérieur (11) et qui doivent être transférées vers des noeuds de réseau (11a-13a) d'un niveau de réseau inférieur (13) ;
(b) transférer (S1) les données sur un noeud de réseau (11a-13a) d'un niveau de réseau moyen (12) voisin du niveau de réseau supérieur (11) jusqu'à ce que ce niveau de réseau moyen ait reçu toutes les données ;
(c) transférer (S2) les données du noeud de réseau (12a) du niveau de réseau de moyen (12) vers au moins un noeud de réseau (12a) du même niveau de réseau moyen (12) voisin de celui-ci jusqu'à ce que ce noeud de réseau voisin (12a) ait reçu toutes les données ;
(d) répéter (S4) l'étape (e) jusqu'à ce que tous les noeuds de réseau (12a) du niveau de réseau moyen (12) aient reçu les données ;
(e) transférer simultanément (S3) les données des noeuds de réseau (12a) du niveau de réseau moyen (12) sur les noeuds de réseau (13a) du niveau de réseau inférieur (13) qui sont respectivement associés à ceux-ci.

2. Procédé selon la revendication 1,
**caractérisé en ce que**
les noeuds de réseau (11a-13a) de différents niveaux de réseau (11-13) sont configurés physiquement de manière identique et logiquement de manière différente.

3. Procédé selon une des revendications précédentes,
**caractérisé en ce**
**que** la logique des noeuds de réseau (11a-13a) est réglable.

4. Procédé selon une des revendications précédentes,
**caractérisé en ce**
**que** des noeuds de réseau (11a-13a), d'au moins un niveau de réseau (11-13) et de préférence de tous les niveaux de réseau (11-13), qui sont en liaison de communication de données les uns avec les autres forment un réseau fédérateur sans fil (17).

5. Procédé selon une des revendications précédentes,
**caractérisé en ce**
**que** des noeuds de réseau (11a-13a) qui sont en liaison de communication de données les uns avec les autres forment respectivement une liaison de communication de données en chaîne (16a-16c), les noeuds de réseau (11a-13a) du premier niveau de réseau (11) étant si possible agencés centralement dans une liaison respective de communication de données en chaîne (16a).

6. Procédé selon une des revendications précédentes,
**caractérisé en ce**
**qu'**au moins un noeud de réseau (11a-13a) d'un niveau de réseau inférieur (11-13) qui comporte au moins deux noeuds de réseaux (11a-13a) différents d'un niveau de réseau supérieur correspondant (11-13) présente une liaison de communication de données sans fil (16a-16c).

7. Procédé selon une des revendications précédentes,
**caractérisé en ce**
**qu'**un premier niveau de réseau supérieur (11) présente deux et de préférence une pluralité de noeuds de réseau (11a-13a).

8. Procédé selon une des revendications précédentes,
**caractérisé en ce**
**que** le réseau maillé (10) présente trois niveaux de réseau différents (11-13) ou plus, dans lequel
- un premier niveau de réseau supérieur (11) présente au moins un noeud de réseau de passerelle (11a) qui permet de coupler le réseau maillé (10) à des systèmes (14) externes au réseau,
- un deuxième niveau de réseau moyen (12) présente plusieurs noeuds de réseau de base (12a) pour transférer les données reçues,
- un troisième niveau de réseau inférieur (13) présente une pluralité de noeuds de réseau d'extrémité (13a) qui forment une liaison de communication de données sans fil (16c) respectivement avec au moins un noeud de réseau de base (12a).

9. Procédé selon la revendication 8,
**caractérisé en ce**
**que** les noeuds de réseau d'extrémité (13a) du troisième niveau de réseau (13) sont régulièrement répartis dans une configuration de cabine et en ce que les noeuds de réseau de base (12a) des niveaux de réseau (11, 12) disposés sur ceux-ci sont agencés à l'intérieur de la configuration de cabine de manière à pouvoir construire, avec un nombre minimum de noeuds de réseau de base (12a), une liaison de communication de données (16b, 16c) entre les noeuds de réseau de base (12a) et les noeuds de réseau d'extrémité (13a).

10. Procédé selon une des revendications précédentes,
**caractérisé en ce**
**que** les noeuds de réseau (11a-13a) reçoivent et/ou envoient des données respectivement par l'intermédiaire d'un émetteur/récepteur fonctionnant de manière autonome.
